# EUROPEAN PATENT APPLICATION

(11) **EP 2 677 456 A1**
(43) Date of publication of application: **25.12.2013**
(21) Application number: 13172711.7
(22) Date of filing: 19.06.2013
(51) Int. Cl.: G06F 21/88, G06F 21/78

(54) **A memory device reminder**

(30) Priority: 19.06.2012 FI 20124123
(71) Applicant: Seppälä, Mikael, 00210 Helsinki (FI)
(72) Inventor: Seppälä, Mikael, 00210 Helsinki (FI)
(74) Representative: Kolster Oy Ab

(57) **Abstract**

The invention relates to a computer (2-2, 3-2) that comprises a port (2-6, 2-6, 4-6) adapted to receive a memory device (2-8, 3-8, 4-8); a processor (4-42) adapted to fetch from the memory device (2-8, 3-8, 4-8) in the port a memory device-specific monitoring time and to set the monitoring time as an expiry time; a timer (4-44) adapted to measure time lapsed from the last use of the memory device (2-8, 3-8, 4-8), to reset the measured time, when the memory device (2-8, 3-8, 4-8) is used, and to check whether the measured time exceeds the expiry time; and means (4-46) responsive to the timer for providing a signal, if the measured time exceeds the expiry time.

## Description

### Field of the invention

The invention relates to a memory stick and especially to a method and device that reminds the user of the memory stick to take the memory stick with him/her after use.

### Background of the invention

According to the prior art, a user of a computer can store his/her files on a memory stick. The user carries the memory stick with him/her and when s/he wants to use the files stored on the memory stick, s/he inserts the memory stick into a computer. Files can be accessed from a memory stick or stored into it. When the user stops using the computer, s/he removes the memory stick from it and takes it along.

However, a problem with the arrangement described above is that often the user forgets to remove the memory stick from the computer after s/he has stopped using the computer. This causes a data security problem, because when the user walks away from the computer where s/he has forgotten the memory stick, any one of the following users can take the memory stick and use or examine its contents.

### Brief description of the invention

It is an object of the invention to develop a method and an apparatus implementing the method in such a manner that the above-mentioned problems are solved. The object of the invention is achieved by a method and system that are characterised by what is disclosed in the independent claims. Preferred embodiments of the invention are disclosed in the dependent claims.

The invention is based on making a program in a general computer programming language to remind the user at certain intervals that the memory stick is still connected to the computer. This reduces data security risks and financial losses that are caused by the use of forgotten external memory sticks.

The method and system of the invention provide the advantage that data security improves, because memory sticks are no longer forgotten in computers.

### Brief description of the figures

The invention will now be described in more detail by means of preferred embodiments and with reference to the accompanying drawings, in which:
Figure 1 shows a method according to the invention and its preferred embodiments;
Figure 2 shows a system according to the invention and its preferred embodiments;
Figure 3 shows a system according to the invention and its preferred embodiments; and
Figure 4 shows a computer and memory device according to the invention and its preferred embodiments.

### Detailed description of the invention

The following describes the memory stick as a USB (universal serial bus) memory stick, but it is to be understood that the invention and its preferred embodiments can be used with any memory stick or device mountable on a computer, such as a Compact Flash CF memory card, Micro Secure Digital MicroSD memory card, XQD memory card, Secure Digital SD memory card, extreme Digital xD memory card, flash memory card or any other corresponding memory card, or with a device to which said or corresponding memory card or memory card characteristic is attached or to which the device is connected.

Thus, the invention is applicable to a memory stick that can be detachably attached to a computer port. Said port may also be other than a USB port.

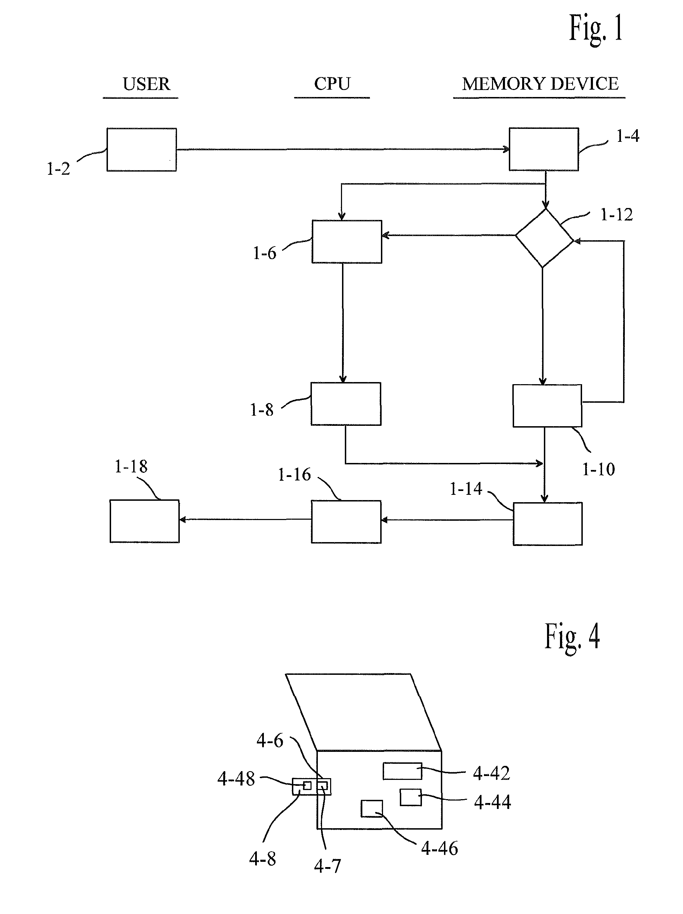

Figure 1 shows a method according to the invention and its preferred embodiments. In step 1-2 of Figure 1, the user USER inserts the memory device or stick into a USB port of a computer. The reminder program on the memory stick activates through the USB port automatically in the processing unit of the computer in the same manner as the MEMORY DEVICE identification program of the device in step 1-4. In step 1-6, a reminder window of the memory stick and the information or text that the memory stick is now connected to the computer can appear on the display of the computer (Figure 1, CPU). The reminder window may for example be a popup-type reminder/alert window: "Remember me". The user may either close the reminder window in step 1-8, minimize it or keep it on the display as a reminder of the memory stick in the USB port.

As an alternative to having the reminder program on the memory stick to activate through the USB port automatically in the processing unit of the computer, the user can be asked if s/he wants the reminder program to activate in the processing unit.

The reminder routine can be run at certain intervals, every fifth, tenth or fifteenth minute, for instance, as shown in step 1-10. It is then possible to move to step 1-12 and to test whether the memory stick has been used during a predefined or randomly selected period, such as the past five, ten, or fifteen minutes. The testing is done according to a program on the memory stick, which uses the clock on the computer to determine the time. If the memory stick has not been used during said time period, the routine can move to step 1-6, where a warning window is shown on the display or some other signal is provided to the user in response to the fact that the memory stick has not been used for some time. However, if the memory stick has been used during the past time period, during the past fifteen minutes, for instance, the routine can move from step 1-12 to step 1-10, in which the time counter re-starts. From step 1-4, the routine can also move directly to step 1-12 to test the time lapsed from the last use or activation of the memory stick.

When the computer is being switched off in step 1-14, the method of the memory stick reminder moves to step 1-16, in which a reminder window can be forced open on the computer display and/or an audio signal and/or some other sensory signal or trigger provided to the user so that the user remembers to remove the memory stick from the USB port of the computer. After this, in step 1-18, the user removes the memory stick from the USB port of the device.

According to a preferred embodiment, the memory stick reminder can be installed on an external memory device, memory stick, memory medium, or memory disc. The program can be installed onto the device from a data network, such as the Internet, or downloaded from a company network drive. The program can be downloaded later or installed onto the memory stick already during manufacturing.

As described above, the program that has been installed on an external memory stick helps its user to remember to take the memory stick along, when s/he stops using the computer, switches off the computer or closes the computer. The switching off or closing of the computer may be done from a menu or by closing the cover or a detachably attachable cover of the computer. Thus, the program reminds the user of the memory stick that the memory stick is still attached to the computer. Thanks to this reminder, the user will no longer forget the memory stick(s) in the computer.

The program can be implemented in several different ways as selected by the user. The user can select the time interval for the reminder or s/he can stop the reminder for the duration of the work, but not completely. When the computer is switched off or when the user of the computer changes to another user id, the program reminds about the existence of the memory stick. In a first application, when the user or owner of a memory stick has inserted an external memory stick into a computer and does not use the memory stick for a certain time, during fifteen minutes, for example, the device reminds by means of the installed program of its existence by an audio signal of the computer and a small popup window on the display of the computer. In a second application, when the user exits the machine by using the logout function or by switching off the computer, the reminder installed on the memory stick reminds him/her to take the memory stick along with an audio signal and popup window before the computer can start the switching off program.

The invention can also be applied to other devices than computers. A connectable, port-inserted device can be connected or inserted to a computer, display terminal, pad device, mobile phone, communicator, navigator, car, slot machine, game device, television, or even refrigerator. The stick can be inserted into a memory stick-reading port in a car, for instance.

A port-insertable device can also be some other device than a memory stick, such as a modem, WLAN card, network dongle or some other card, stick, or data medium that provides network access and/or wireless communication access to at least one device connected to it. The port-insertable device can also be a combination of these. The network dongle can have a network management program and/or Bluetooth adapter or some other short-range radio adapter. A network connection is disconnected when it is shut down from the computer or when the computer is switched off or closed. The program can show whether there is a connection. Thus, a network dongle allows you to read and/or transfer and/or store data and/or open and close a network connection.

According to the invention and its preferred embodiments, a device using serial and/or parallel bus architecture, such as a memory stick or some other peripheral device, can be connected to a port of a computer that uses serial and/or parallel bus architecture. A data medium is a general name for all information technology devices that are within the scope of the invention and its preferred embodiments.

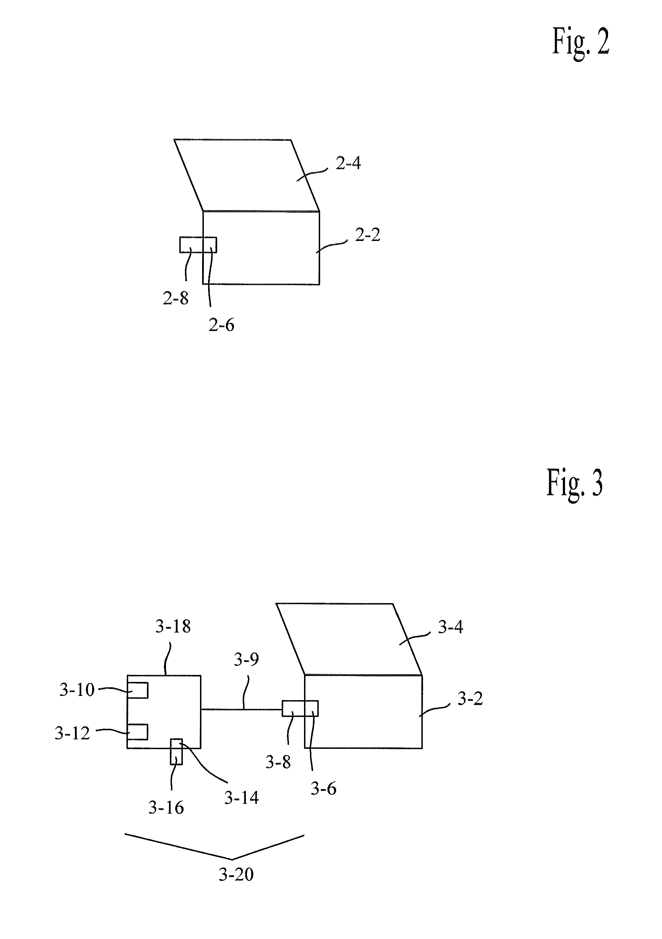

Figure 2 shows a system according to the invention and its preferred embodiments. A portable computer 2-2 with a display terminal 2-4 comprises one or more ports 2-6 for receiving a port-insertable device 2-8. When the computer is being switched off, the reminder of the port-inserted device 2-8, such as memory stick, reminds the user on the display terminal, for instance, of the device in the port, and the user easily remembers to take the memory stick along. According to a preferred embodiment, the reminder can also be produced as an audio, light, text and/or pattern signal of the computer and/or memory stick, for instance.

Figure 3 shows a system according to the invention and its preferred embodiments. Figure 3 shows a portable computer or measuring device 3-2 with a display terminal 3-4 as well as a USB port or some other corresponding receiving port 3-6. According to a preferred embodiment of the invention, a device adapter 3-20 can be attached to the port, such as USB port 3-6. It may comprise a USB connector 3-8 and adapter device 3-18 and a connection 3-9 between them. The adapter device may have one or more ports 3-10, 3-12, 3-14 for receiving one or more devices, such as memory card 3-16 or network dongle. In other words, it is possible to arrange one or more second devices 3-16 through the first device 3-8 to the computer, and the devices communicate with the USB port through the device adapter. The reminder may be used for at least one second device and/or the adapter device and/or the first USB connector device, first device. During communication between the USB port and a second device, the communication of the second device can be converted to the protocol of the USB bus. The communication may for instance be information on whether the device of the second type has been connected to the USB port. The device may also be passive, in which case the signal is only provided when requested from the device and when a connection has been established, when the device connected to the adapter is detached from the device. The device may also be active, in which case it is capable of automatically communicating its identity and status to the user of the computer or some other corresponding data medium and, if necessary, of guiding and warning the user. One or more devices of the same and/or different type can be connected to the device adapter or USB hub. A signal can be provided when a change takes place in one or more connected devices or when the computer is being switched off.

Figure 4 shows a computer and memory device according to the invention and its preferred embodiments. A memory device 4-8 has means 4-7 for inserting the memory device into a port 4-6 of the computer. The memory device may also have means 4-48 for displaying a signal to the user. The computer in turn comprises a timer or counter 4-44, processor or central processing unit 4-42 and means 4-46 responsive to the timer or counter for providing a signal to the user. Said blocks may reside in one block or as separate devices, and they may communicate with each other.

According to a preferred embodiment of the invention, a user profile, user id, password, finger print identifier and/or any other protection means of a computer can be associated with the port-insertable memory stick.

According to the invention and its preferred embodiments, a computer is provided that comprises a port adapted to receive a memory device. Said port may be a port using the serial bus architecture of the computer. The computer further comprises a processor that is adapted to fetch from the memory device in the port a memory device-specific monitoring time and to set the monitoring time as the expiry time; a timer that is adapted to measure the time lapsed from the last use of the memory device, to reset the measured time, when the memory device is used, and to check whether the measured time exceeds the expiry time. The computer also comprises means responsive to the timer for providing a signal to the user if the measured time exceeds the expiry time.

The condition for providing the signal may thus be met, when the time of the last use of the memory device exceeds a predefined time, the expiry time. When the memory device is again used, the counter counting the lapsed time is reset and begins a new count.

The means for providing a signal may be arranged to provide one or more or the following signals: a light signal, audio signal, sensory signal, window displayed on the screen, or icon or text displayed on the screen. The means for providing the signal can also be arranged to provide the signal through an interface of the computer and/or through a memory device. The means for providing the signal can also be arranged to provide a signal to the user when the computer is put in sleep mode or shut down.

According to the invention and its embodiments, a memory device is also provided, the device comprising means for connecting to a computer and further a memory for storing memory device-specific monitoring time. The memory device may also comprise means for receiving a signal to be displayed to the user from the computer and means for displaying the signal to the user.

As stated above, the memory device may further comprise means for establishing a network connection and/or a wireless connection to at least one communication device connected thereto and/or a network management program and/or a Bluetooth adapter and/or some other short range radio adapter.

As described above, according to a preferred embodiment of the invention, the reminder of the memory device always counts the time lapsed from the use of the memory device. If the lapsed time is sufficiently long, the reminding means remind the user that s/he still has a memory device in the computer. In addition to this, the user can also be reminded of the memory device, when the computer is being switched off or set into sleep mode. According to another preferred embodiment, the reminding means remind of the memory device only when the computer is being switched off or set into sleep mode. In this embodiment, the time counter is not started or does not exist.

The invention and its preferred embodiments provide several advantages in comparison with present prior-art solutions. The data security of companies improves, when memory sticks are not forgotten in computers. In addition, the information on the memory stick is safe. The solution also reduces costs that arise from purchasing new memory sticks, among other things. An advantage of the invention is also that a device which gets its power from a USB port or some other port and which consumes power either continuously or periodically will now be more assuredly removed from the computer, thus reducing the power consumption of the computer.

It will be apparent to a person skilled in the art that as technology advances, the basic idea of the invention may be implemented in many different ways. The invention and its embodiments are thus not restricted to the examples described above but may vary within the scope of the claims.

## Claims

1. A computer (2-2, 3-2) that comprises:
a port (2-6, 2-6, 4-6) that is arranged to receive a memory device (2-8, 3-8, 4-8), **characterised in that** it further comprises:
a processor (4-42) adapted to fetch from the memory device (2-8, 3-8, 4-8) in the port a memory device-specific monitoring time and to set the monitoring time as an expiry time;
a timer (4-44) that is adapted to measure time lapsed from the last use of the memory device (2-8, 3-8, 4-8), to reset the measured time, when the memory device (2-8, 3-8, 4-8) is used, and to check whether the measured time exceeds the expiry time; and
means (4-46) responsive to the timer for providing a signal to the user if the measured time exceeds the expiry time.

2. A computer (2-2, 3-2) as claimed in claim 1, wherein the means (4-46) for providing a signal are adapted to provide one or more of the following signals: a light signal, audio signal, sensory signal, window displayed on the screen or icon or text displayed on the screen.

3. A computer (2-2, 3-2) as claimed in claim 1 or 2, wherein the means (4-46) for providing a signal are adapted to provide the signal through the user interface (2-4, 3-4) of the computer and/or through the memory device (2-8, 3-8, 4-8).

4. A computer (2-2, 3-2) as claimed in any one of preceding claims 1 to 3, wherein the port (2-6, 2-6, 4-6) is a port (2-6, 2-6, 4-6) using the serial bus architecture of the computer.

5. A computer (2-2, 3-2) as claimed in any one of preceding claims 1 to 4, wherein the means (4-46) for providing a signal are adapted to provide a signal to the user, when the computer (2-2, 3-2) is put into sleep mode or the computer (2-2, 3-2) is shut down.

6. A memory device (2-8, 3-8, 4-8) that comprises:
means for connecting to a computer (2-2, 3-2), **characterised in that** it further comprises:
a memory for storing a memory device-specific monitoring time.

7. A memory device (2-8, 3-8, 4-8) as claimed in claim 6, further comprising:
means for receiving a signal to be displayed to the user from the computer (2-2, 3-2); and
means (4-48) for displaying the signal to the user.

8. A memory device (2-8, 3-8, 4-8) as claimed in claim 6 or 7, further comprising:
means for establishing a network connection and/or wireless connection to at least one communication device connected thereto; and/or
a network management program and/or Bluetooth adapter and/or some other short range radio adapter.
